# EUROPEAN PATENT SPECIFICATION

(11) **EP 1 703 020 B1**
(45) Date of publication and mention of the grant of the patent: **08.04.2020**
(21) Application number: 06075354.8
(22) Date of filing: 16.02.2006
(51) Int. Cl.: E01C 9/00, E01C 5/06, E01C 5/08

(54) **Road verge**
Seitenstreifen einer Strasse
Accotement

(30) Priority: 16.02.2005 NL 1028289; 02.03.2005 NL 1028441
(43) Date of publication of application: 20.09.2006
(73) Proprietor: Pannekoek, Jakob Gerrit Hendrik, 8084 PB 't Harde (NL); Bockhoven, Jan, 8162 RR Epe (NL)
(72) Inventor: Pannekoek, Jakob Gerrit Hendrik, 8084 PB 't Harde (NL); Bockhoven, Jan, 8162 RR Epe (NL)
(74) Representative: Land, Addick Adrianus Gosling

(56) References cited:
- DE-A1- 2 356 742
- DE-A1- 2 707 558
- DE-A1- 3 533 020
- DE-U- 1 940 943
- DE-U1- 20 115 982
- US-A1- 2004 086 344
- "MERKBLATT FUER FLAECHENBEFESTIGUNGEN MIT PFLASTERDECKEN UND PLATTENBELAEGEN", MERKBLATT FUER FLAECHENBEFESTIGUNG MIT PFLASTERDECKEN UNDPLATTEN BELAEGEN, REGELBAUWEISE, FORSCHUNGSGESELLSCHAFT FUER STRASSEN- UND VERKEHRSWESEN, DE, 1 January 2003 (2003-01-01), pages 1-28, XP009049637,

## Description

The invention relates to a road verge.

In rural areas it is known to cover the verges of paved roads, in particular asphalted roads, with concrete stones, in particular with concrete stones with holes for plants to grow through, in order to increase the passable surface with respect to temporary swerving manoeuvres, such as when vehicles meet, or for temporary parking situations.

Such concrete stones are known for example from NL1019170C.

According to a known embodiment a combined mat is used, which consists of a geotextile and a bond of square concrete stones which are attached thereto by means of pins and which are provided with grow-through holes, and the sides of which are aligned with respect to each other.

According to another known embodiment a geotextile is laid and onto it a bond of square concrete stones provided with grow-through holes is placed, which are bound together by means of horizontal wires.

The known systems are complex and therefore they are expensive. Nevertheless in case of settings the stones may tip over in a direction transverse to the direction of travel and thereby form gaps, which may be dangerous for the traffic.

It is an object of the invention to provide a verge cover, which may provide an improvement in this respect.

According to the invention a road verge according to claim 1 is provided.

The road verge is formed as a verge strip which extends along a paving, composed of equal groups of concrete stones, forming a bond which may or may not be permanent, said bond being oriented transversely to the direction of travel or main direction of the paving, wherein the transition areas or joints, between the stones parallel to the direction of travel are staggered with respect to each other. In case of a bond with loose concrete stones the transition areas between the stones, when considered in the direction of travel, will be successively shifted in transverse direction, so that in use continuous gaps extending in the direction of travel, are prevented. A possible gap is interrupted at the end of a stone or a pair of adjacent stones. In case of an optional coherent bond of concrete stones, in the form of a slab (vide below), the concrete stones will form intended fracture areas at the location of the transition areas and, after being fractured, they will form a joint there at the desired location, with a similar effect as would be obtained with separate stones.

The formation of gaps in case of separately arranged stones is furthermore prevented if, at least at the joint edges which extend transversely to the direction of travel, the stones are provided with concave and convex profiles for mutually interlocking engagement, whereby the stones which connect to each other in the direction of travel, will be kept in place with respect to each other, through the bond according to the invention for the stones which alternately connect to each other at that location.

The integrity of the stone pattern is enhanced and the formation of gaps is further prevented when, at least at the joint edges which extend parallel to the direction of travel, the stones are provided with concave and convex profiles for mutually interlocking engagement.

The verge cover according to the invention can be formed in a simple manner: the stones may be placed on a geotextile and be connected with it merely by support, in particular be freely supported. The stone bond may be void of horizontal bonding elements passed through the stones. Additional connection or attachment means need not be necesssary.

In an embodiment with grow-through holes the stones are provided with vertically continous holes.

In the above mentioned embodiment with a coherent bond various stones are interconnected in said groups to form slabs by means of transition areas which are formed by continuation of the concrete material of the stones, wherein the transition areas are formed as intended fracture areas. According to this embodiment larger areas can be made and placed simultaneously. When a load is exerted on the slab which exceeds the failure load of a transition area, the slab will break there at the anticipated location. The intended bond will not change then. The verge cover will therefore act as anticipated and intended.

According to one embodiment the intended fracture areas are preferably formed by a notch along more than half the stone height, starting from the upper surface of the stones, in the tensile zone. The notch extends preferably along approximately 2/3 of the stone height, starting from the upper surface of the stones.

When the intended fracture areas are formed as concave and convex transition areas, the stones will be prevented from shifting with respect to each other also after the intended fracture.

According to an alternative embodiment loose stones are laid. Since the stones are laid in equal groups, they can be laid more easily.

According to the invention, the groups are composed of a number of first stones with longitudinal and lateral sides and a number of second stones with longitudinal sides which correspond with the lateral sides of the first stones. The first stones have equal lateral and longitudinal sides. The second stones have lateral sides of half a longitudinal side.

According to the invention, when considered in the direction of travel, the groups are formed of two first stones, which are adjacent to each other in a direction transverse to the direction of travel, succeeded by a set formed by a first stone having at both sides, in a direction transverse to the direction of travel, connecting second stones which are located with their longitudinal direction parallel to the direction of travel, the set being succeeded by two first stones adjacent to each other in the direction transverse to the direction of travel.

According to an embodiment which may be produced or assembled well, the group has a length x width of approximately 122 x 82 cm.

The first stones may have a length x width of approximately 41 x 41 cm and the second stones may have a length x width of approximately 41 x 21 cm.

According to an embodiment, in which the formation of a gap is also prevented at the connection to the road paving, the edge of the road verge cover which borders the edge of the paving, is straight.

In a method for forming a cover for a road verge, not covered by the present invention, a pattern of concrete stones is produced in a bond, wherein at the location of the transition areas the stones are interconnected by the concrete material while forming intended fracture areas and the pattern of stones is placed in situ as a single slab.

The single plate can be placed loosely on a geotextile.

As an alternative, during the production of the concrete slab, the concrete material may be brought in adherance or intimate material connection with a cloth or sheet, preferably at the bottom side of the concrete slab. This carrier (cloth, sheet, geotextile) then forms an additional connection (without pins or the like) for the concrete parts which are interconnected by the transition areas of the concrete at the location of the intended fracture areas, such as notches. Should the concrete slab break before being placed, possibly at the location of the notches, the carrier will keep the concrete parts together which are separated then, and the slab can still be handled as such. If, in use, the concrete slab would break at an unexpected location at a distance from the notches as a consequence of a special load, then the concrete parts at both sides of the fracture line will still be held together by the carrier. Then the carrier also ensures that at the location of the usually craggy fracture line, these concrete parts may remain interlocked, so that mutual shift is furthermore prevented.

The concrete material may be cast on the cloth or sheet and cures on it.

According to one embodiment the bond in the slab is directed transversely to the direction of travel or main direction of the paving.

The transition areas may be formed as concave and convex transition areas.

At least at the joint edges which extend transversely to the direction of travel, the stones may be provided with concave and convex profiles for mutually interlocking engagement, and/or, at least at the joint edges which extend parallel to the direction of travel, they may be provided with concave and convex profiles for mutually interlocking engagement.

Notches may be formed in the slabs so as to form intended fracture areas. The concrete slab may be stored, transported and placed as such, and in use the concrete slab may break at the intended locations, so that an undesirable fracture area is prevented. Undesirable tipping over of the parts which remain after fracture, the size of which may possibly be fixed as well, can also be prevented then.

Preferably the notches are provided starting from the upper side of the slab and end at a distance starting from the bottom side of the slab.

In a direction parallel to the surface of the upper side/bottom side the notches may substantially continue from the one slab edge to the opposite slab edge. The notches extend preferably in two directions which are perpendicular to each other.

In a direction transverse to the notch, the notches preferably extend in an alternating manner, such as in a zigzag or undulatory manner. After a fracture at the notches the released edges will interlock, by which a mutual shift in longitudinal direction of the joint, which is formed by the fracture, is prevented.

If the notches extend along more than half the slab thickness, preferably along approximately 2/3 of the slab thickness, the concrete slab can be stored, transported and placed as such, but in use the concrete slab may break at the intended locations. The notches may define the (intended) stone pattern.

According to one embodiment the material of the slab is intimately connected with a carrier in the form of a sheet or cloth, such as a geotextile.

Optionally it is possible, also when forming the concrete stones loosely in a mould, to allow the material of the concrete stones to form an intimate connection with a cloth or sheet, such as geotextile. Thus one makes more sure that the concrete stones will not move away from each other or alongside each other, for instance when a convex section breaks off.

The invention will be elucidated on the basis of a number of exemplary embodiments which are shown in the attached drawings, in which:
Figure 1 shows a schematic cross-section of a motorway with paved verges;
Figure 2 shows a schematic top view of the verge area of the motorway of figure 1, not according to the present invention;
Figure 3 shows a group of concrete stones to construct the verge paving of the road of figure 2;
Figure 4 shows a group of concrete stones to construct the verge paving of the road of figure 1, not according to the present invention;
Figure 5 shows a group of concrete stones to construct the verge paving of the road of figure 1, according to the invention;
Figure 6 shows a side view of an embodiment of the group of concrete stones of figure 3, in the configuration of a slab; and
Figure 7 shows a side view of an alternative embodiment of the slab of figure 6, connected to a carrier.

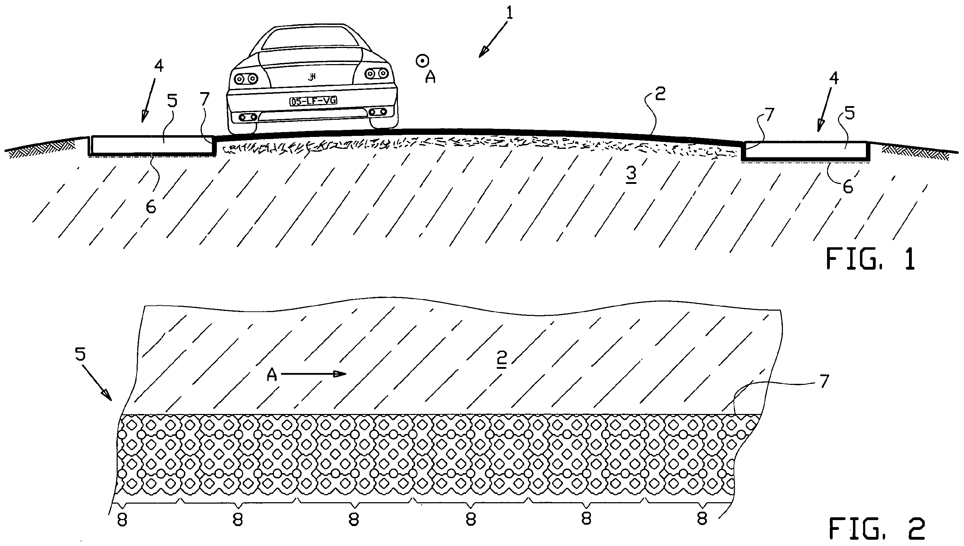

The road 1 as illustrated in figure 1 comprises an asphalt cover 2, placed on a foundation 3, which forms the normal road surface. Verge pavings 4 are arranged at both sides of the asphalt cover 2, composed of a paving of concrete blocks 5 which are placed along the edge of the asphalt cover 2, and which are freely/loosely supported on a geotextile 6.

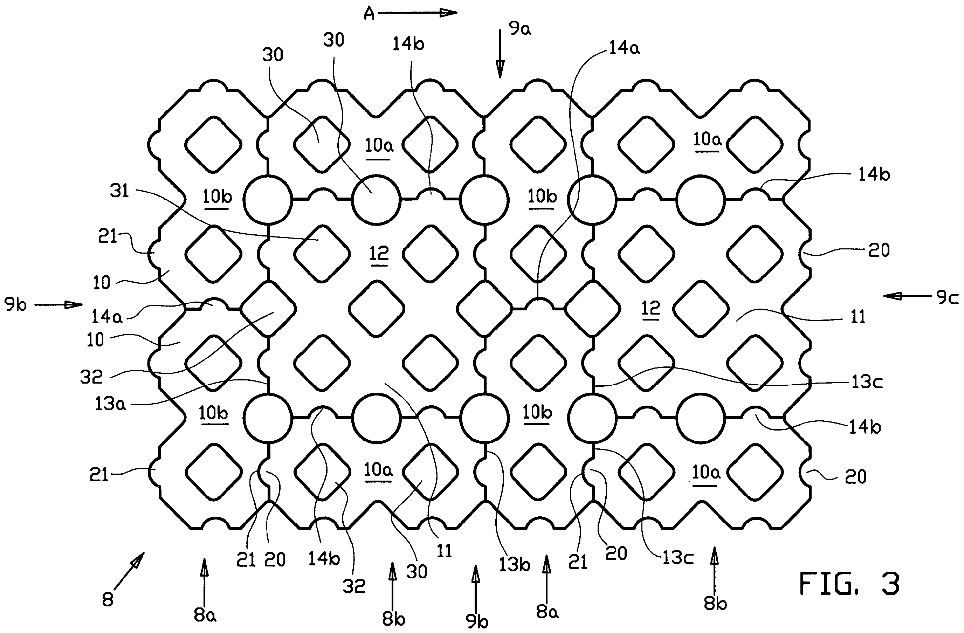

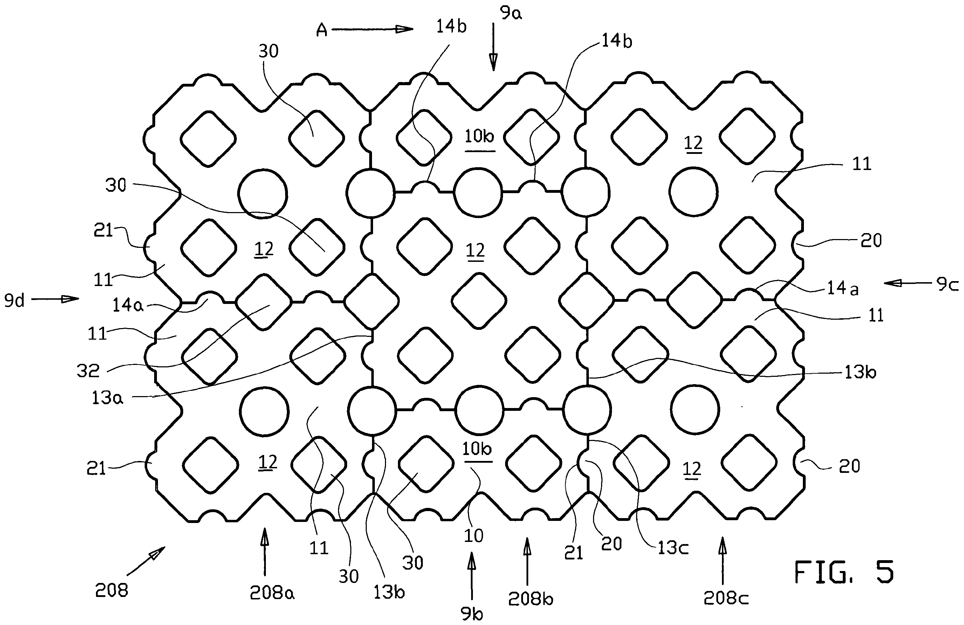

As can be seen in figure 2, the paving of concrete stones 5 consists of a series of groups 8, which are shown in figures 3-6 in a number of exemplary embodiments, of which only the embodiment of figure 5 is according to the present invention.

In the embodiment of figure 3 the group 8 has short sides 9c and 9d and long sides 9a and 9b, wherein the long side 9a or 9b is destined to abut against the edge 7 of the asphalt cover 2.

It can be seen that the edges 9c and 9d, respectively, are provided with recesses 20 and protrusions 21, with which concave/convex connections with adjoining edges 9d and 9c, respectively, of longitudinally connecting next groups 8 can be formed. The edges 9a and 9b are also provided with recesses 20, for optional connection of a next series of groups 8 with concave/convex couplings.

The group 8 of figure 3 is composed of concrete blocks 11 (12) with a width (B) and a length (L) of equal dimension, and concrete blocks 10, with an L/B-ratio of 2. Two blocks 10, with their longitudinal edges placed against each other, form a surface which is similar to the surface of the concrete block 11 (12).

In this example all sides of the concrete blocks 10 and 11 are provided with respective recesses 20 and protrusions 21.

In the pattern of group 8 two subgroups are involved which are each composed of four concrete blocks 10 and one concrete block 11, wherein each concrete block 11, when considered and viewed transversely to the axis of the road, is bounded at both sides by two concrete blocks 10a, and this subgroup 8b, when considered in the direction of the road axis, the direction of travel A, is bounded at one side by a subgroup 8a of two transversely arranged concrete blocks 10b.

In this configuration transverse transition areas 13 will be involved, directed transverely to the direction of travel A, which, however, do not extend straight but because of the concave/convex interlocking engagements, form a meandering course of interlocking engagement. As a consequence the subgroup of the concrete blocks 10a, 12 and 10a cannot shift in the direction transverse to the direction of travel A with respect to the connecting subgroups 10b, 10b.

Furthermore it is a special aspect that when considered in the direction of travel A, no continuous transition area is present: the transition area 14a between the concrete blocks 10b, 10b is staggered along half a length of a concrete block 10a relative to the transition area 14b between the concrete blocks 10a, 12 and 12, 10a. Thus the concrete stones 10, 11 form a bond which is secured against mutual shift, and no additional means such as pins are necessary to secure the concrete stones in place on the basis, such as geotextile.

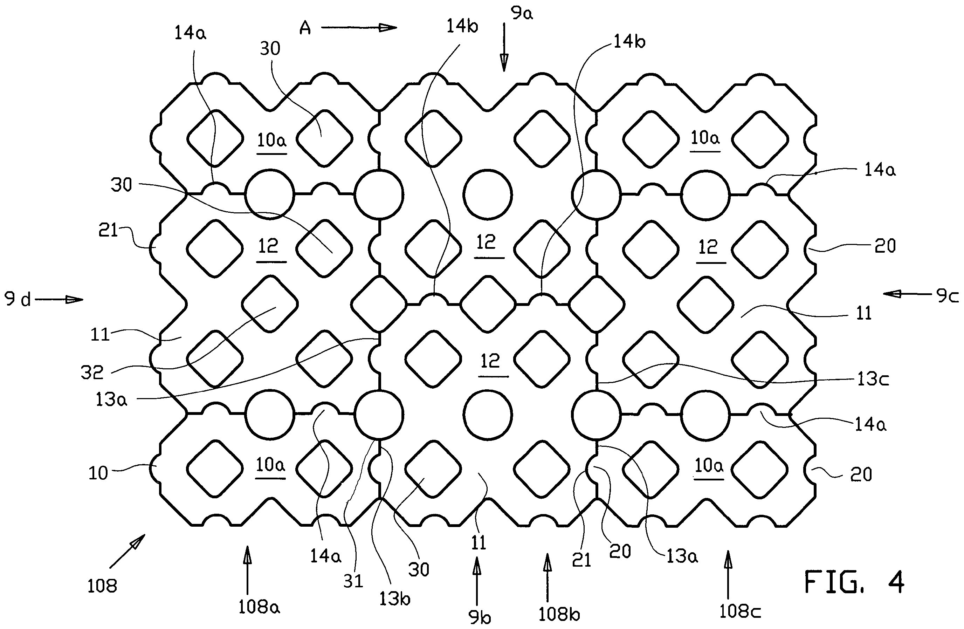

Figure 4 shows a group 108, which is composed of four concrete blocks 11 and four concrete blocks 10, laid as concrete blocks 10a. Within the group 108 transverse transition areas 13 are involved again, provided with concave/convex interlocking engagements 20/21, as well as groups 108, laid at the location of the transition areas to the next groups in the direction of travel A. The longitudinal transition areas 14 between the subgroup 108b, formed by two concrete blocks 11, and the transition areas in the other subgroups 108a between the blocks 10a, 12 and 12, 10a are again staggered relative to each other, considered in a direction transverse to the direction of travel A.

When placing the next groups 108 in the direction parallel to the direction of travel A, the subgroups of concrete blocks 10a, 12, 10a will connect to similar subgroups. This has as a consequence that a continuous transition area 14 with a length 2L in the direction of travel A is present there. Under conditions this need not be problematic, because at a short distance a discontinuation is formed by the subgroup of the blocks 12,12. Should this be problematic, then the group 208, shown in figure 5, can be used, which is composed of five concrete blocks 11 and two concrete blocks 10. The group 208 is composed of three subgroups, 208a, 208b and 208c, wherein the subgroups 208a and 208b correspond with the subgroups 108b and 108a, respectively, of the group 108 of figure 4. As can be seen the transition area 14a between the concrete blocks 12, 12 is staggered relative to the transition areas 14b between the concrete blocks 10b, 12 and 12, 10b in subgroup 208b. When placing a group 108 in the direction of travel A the subgroup 208 will connect to the subgroup 108a of the group 108, and then again the longitudinal transition areas 14 will also be staggered. This embodiment is however not according to the invention.

According to the invention, the groups 208 are placed in a connecting series in the direction of travel A.

As can be seen in the views of figures 3, 4 and 5 the concrete blocks 10, 11 are provided with continous holes 30, divided according to a regular pattern. This pattern is continued at the location of the transition areas 13, 14 because the concrete blocks 10, 11 are provided with recesses 31, 32, which, at the location of said transition areas, complement each other so as to form similar holes. The distribution of the holes may be in accordance with the one described for the concrete stones which form the subject of Dutch patent NL 1016448 C.

The stones of the groups 8, 108 and 208 can each be simultaneously formed in a mould. In said mould provisions can be made then to form the transition areas 13, 14. For a smooth connection to the edge 7 of the asphalt paving 2, it is furthermore an option not to form the protrusions 21 on the edge 9a, so that a straight abutment surface is formed, despite the recesses 32, or in an alternative manner not to form the recess 20 in the edge 9b.

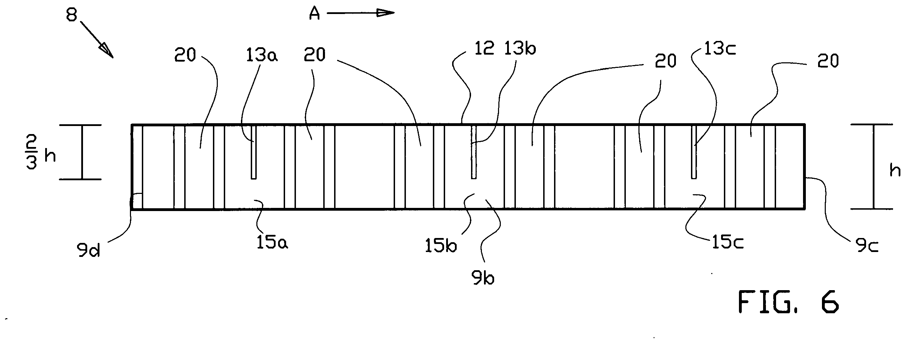

It is also possible to form the groups 8, 108, 208 integrally, in the form of a slab, wherein, as shown in figure 6, these transition areas 13 (as well as 14), which comprise concave and convex connections, are not yet provided along the entire height, but as a notch along a part of said height, more than half the height, preferably along two third of the height, counted from the upper surface of the respective group. Thus the concrete blocks 10, 11 are still interconnected by the concrete material by transition areas 15.

The formation of the groups 8, 108, 208 in the configuration of a slab in this manner is not only advantageous with respect to production techniques, but it also provides advantages with respect to their handling, with respect to storage, transport and laying. Should the respective slab, when in use as a verge cover, be subjected to a high load, for instance a load caused by a traversing loaded lorry, the slab will break within one of the notches 13, 14 in the concrete transition area 15. The direction of fracture will be induced by said notch, and after being fractured the concrete blocks which adjoin said location, will interlock via the intended concave/convex transition areas, by which the resistance against mutual shift in the horizontal plane is ensured to a high degree.

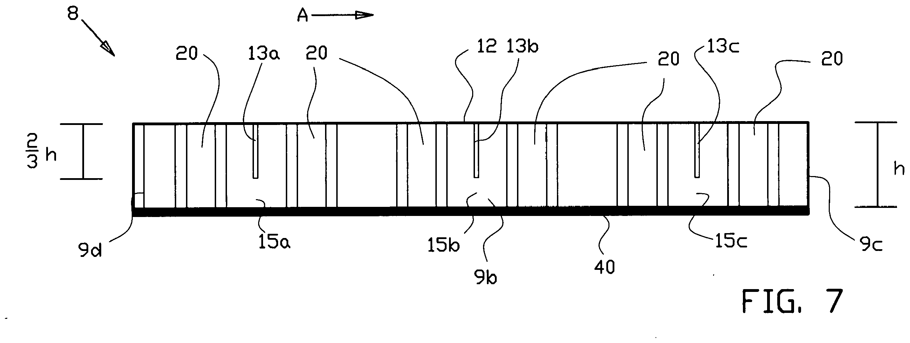

In figure 7 the concrete material is cast onto a cloth or sheet 40, such as geotextile, which is laid in a mould, and will cure on it. Thus the concrete material will be intimately connected with the cloth or sheet. After the concrete slab has been taken out of the mould, the cloth 40 forms an additional connection, which is almost integral with the concrete, so that even after any optional fracture, at unexpected locations, the bond will remain intact.

The dimensions of the groups 8, 108, 208 may be 122 x 82 centimetre. The dimensions of the used concrete blocks or the distances between the notches in case of an integrally formed slab, may be 41 x 41 centimetre for the concrete block 11, and 41 x 21 centimetre for the concrete blocks 10. The height h of the concrete blocks may be 12 centimetre.

## Claims

1. Road verge comprising a cover (4) formed as a verge strip which extends along a paving (2), said cover (4) being composed of concrete stones (5), forming a bond which may or may not be fixed, said bond being oriented transversely and longitudinally to the direction of travel (A) or main direction of the paving (2),
**characterized in that**
transition areas or joints (14a, 14b) between the stones (5) parallel to the direction of travel (A) are staggered with respect to each other,
wherein the stones (5) are arranged in equal groups (208), the groups (208) being composed of a number of first stones (11) with longitudinal and lateral sides and a number of second stones (10) with longitudinal sides which correspond with the lateral sides of the first stones (11), wherein the first stones (11) have equal lateral and longitudinal sides and wherein the second stones (10) have lateral sides of half a longitudinal side; and
wherein each group (208) is composed of five first stones (11) and two second stones (10), wherein when considered in the direction of travel (A), two first stones (11), which are adjacent to each other transversely to the direction of travel (A), are succeeded by set (8b) formed by a first stone (11) having at longitudinal sides which are opposite when considered in a direction transverse to the direction of travel (A), connecting second stones (10) which are located with their longitudinal direction parallel to the direction of travel (A), and wherein when considered in the direction of travel (A), the set (8b) is succeeded by two first stones (11), which are adjacent to each other transversely to the direction of travel (A) ; and
wherein the groups (208) are placed in a connecting series in the direction of travel (A).

2. Road verge comprising a cover (4) according to claim 1, **characterized in that** each group has a length x width of approximately 122 x 82 cm.

3. Road verge comprising a cover (4) according to claim 1 or 2, **characterized in that** the first stones (11) have a length x width of approximately 41 x 41 cm and the second stones (10) have a length x width of approximately 41 x 21 cm.

4. Road verge comprising a cover (4) according to any of the preceding claims, **characterized in that** an edge (9a) of the road verge cover (4) which borders an edge (7) of the paving (2) is straight.

5. Road verge comprising a cover (4) according to any one of the preceding claims, **characterized in that** at least at the lateral sides which extend transversely to the direction of travel (A), the stones (10, 11) are provided with concave and convex profiles (20, 21) for mutually interlocking engagement, wherein each stone (10, 11) has two opposite lateral edges, one of which is provided with the concave profiles (20) while the other lateral edge is provided with the convex profiles (21).

6. Road verge comprising a cover (4) according to any one of the preceding claims, **characterized in that** at least at the longitudinal sides which extend parallel to the direction of travel (A), the stones (10, 11) are provided with concave and convex profiles (20, 21) for mutually interlocking engagement, wherein each stone (10, 11) has two opposite longitudinal edges, one of which is provided with the concave profiles (20) while the other longitudinal edge is provided with the convex profiles (21).

7. Road verge comprising a cover (4) according to any of the preceding claims, **characterized in that** the stone bond is void of horizontal bonding elements passed through the stones (5).

8. Road verge comprising a cover (4) according to any of the preceding claims, **characterized in that** the stones (5) are provided with vertically continuous holes (30).

9. Road verge comprising a cover (4) according to any one of the preceding claims, **characterized in that** the stones (5) are laid as loose stones (5) in equal groups.

10. Road verge comprising a cover (4) according to any of claims 1-8, **characterized in that** the stones (5) are interconnected in the groups (208) to form slabs by means of transition areas which are formed by continuation of the concrete material of the stones (5), wherein the transition areas are formed as intended fracture areas, the intended fracture areas preferably being formed as concave and convex transition areas.

11. Road verge comprising a cover (4) according to claim 10, **characterized in that** the intended fracture areas are formed by a notch along more than half the stone height, starting from the upper surface of the stones (5), wherein the notches extend preferably along approximately 2/3 of the stone height, starting from the upper surface of the stones (5).

12. Road verge comprising a cover (4) according to any one of the preceding claims, **characterized by** a sheet or cloth, such as a geotextile, on which the stones (5) are freely supported and with which they are connected merely by free support.

13. Road verge comprising a cover (4) according to claim 10 or 11, **characterized by** a sheet- or cloth-like support (40), such as a geotextile, with which the slab is intimately connected.

## Patentansprüche

1. Straßenrand, welcher eine Decke (4) umfasst, welche als Randstreifen ausgebildet ist, welche sich entlang einer Pflasterung (2) erstreckt, wobei die Decke (4) aus Betonsteinen (5) zusammengesetzt ist, welche eine Verbindung bilden, welche fixiert oder nicht fixiert sein kann, wobei die Verbindung transversal und longitudinal zu der Fahrtrichtung (A) oder der Hauptrichtung der Pflasterung (2) orientiert ist, **dadurch gekennzeichnet, dass** Übergangsbereiche oder Fugen (14a, 14b) zwischen den Steinen (5) parallel zu der Fahrtrichtung (A) zueinander versetzt sind,
wobei die Steine (5) in gleichen Gruppen (208) angeordnet sind, wobei die Gruppen (208) aus einer Anzahl von ersten Steinen (11) mit longitudinalen und lateralen Seiten und einer Anzahl von zweiten Steinen (10) mit longitudinalen Seiten, welche den lateralen Seiten der ersten Steine (11) entsprechen, zusammengesetzt sind, wobei die ersten Steine (11) gleiche laterale und longitudinale Seiten aufweisen, und wobei die zweiten Steine (10) laterale Seiten von einer Hälfte einer longitudinalen Seite aufweisen; und
wobei jede Gruppe (200) aus fünf ersten Steinen (11) und zwei zweiten Steinen (10) zusammengesetzt ist, wobei, wenn in der Fahrtrichtung (A) betrachtet, zwei erste Steine (11), welche transversal zu der Fahrtrichtung (A) angrenzend zueinander sind, durch einen Satz (8b) gefolgt werden, welcher durch einen ersten Stein (11) gebildet wird, welcher longitudinale Seiten aufweist, welche gegenüberliegend sind, wenn in einer Richtung transversal zu der Fahrtrichtung (A) betrachtet, welche zweite Steine (10) verbindet, welche mit ihrer longitudinale Richtung parallel zu der Fahrtrichtung (A) angeordnet sind, und wobei, wenn in der Fahrtrichtung (A) betrachtet, der Satz (8b) von zwei ersten Steinen (11) gefolgt wird, welche in einer Richtung transversal zu der Fahrtrichtung (A) angrenzend zueinander sind; und
wobei die Gruppen (208) in einer sich verbundenen Reihe in der Fahrtrichtung (A) angeordnet sind.

2. Straßenrand, welcher eine Decke (4) gemäß Anspruch 1 umfasst, **dadurch gekennzeichnet, dass** jede Gruppe eine Länge x Breite von ungefähr 122 x 82 cm aufweist.

3. Straßenrand, welcher eine Decke (4) gemäß Anspruch 1 oder 2 umfasst, **dadurch gekennzeichnet, dass** die ersten Steine (11) eine Länge x Breite von ungefähr 41 x 41 cm aufweisen, und die zweiten Steinen (10) eine Länge x Breite von ungefähr 41 x 21 cm aufweisen.

4. Straßenrand, welcher eine Decke (4) gemäß irgendeinem der vorhergehenden Ansprüche aufweist, **dadurch gekennzeichnet, dass** eine Kante (9a) von der Straßenrand-Deckel (4), welche an eine Kante (7) von der Pflasterung (2) angrenzt, gerade ist.

5. Straßenrand, welcher eine Decke (4) gemäß irgendeinem der vorhergehenden Ansprüche aufweist, **dadurch gekennzeichnet, dass** zumindest an den lateralen Seiten, welche sich transversal zu der Fahrtrichtung (A) erstrecken, die Steine (10, 11) mit konkaven und konvexen Profile (20, 21) versehen sind zum beidseitigen verriegelnden in Eingriff nehmen, wobei jeder Stein (10, 11) zwei gegenüberliegende laterale Kanten aufweist, von denen eine mit den konkaven Profilen (20) versehen ist, während die andere lateralen Kante mit den konvexen Profilen (21) versehen ist.

6. Straßenrand, welcher eine Decke (4) gemäß irgendeinem der vorhergehenden Ansprüche aufweist, **dadurch gekennzeichnet, dass** zumindest an den longitudinalen Seiten, welche sich parallel zu der Fahrtrichtung (A) erstrecken, die Steine (10, 11) mit konkaven und konvexen Profilen (20, 21) zum beidseitigen verriegelnden in Eingriff nehmen versehen sind, wobei jeder Stein (10, 11) zwei gegenüberliegende longitudinale Kanten aufweist, von denen eine mit den konkaven Profilen (20) versehen ist, während die andere longitudinale Kante mit den konvexen Profilen (21) versehen ist.

7. Straßenrand, welcher eine Decke (4) gemäß irgendeinem der vorhergehenden Ansprüche aufweist, **dadurch gekennzeichnet, dass** die Steinverbindung keine horizontalen Verbindungselemente aufweist, welche durch die Steine (5) hindurch geführt sind.

8. Straßenrand, welcher eine Decke (4) gemäß irgendeinem der vorhergehenden Ansprüche aufweist, **dadurch gekennzeichnet, dass** die Steine (5) mit vertikal durchgehenden Löchern (30) versehen sind.

9. Straßenrand, welcher eine Decke (4) gemäß irgendeinem der vorhergehenden Ansprüche aufweist, **dadurch gekennzeichnet, dass** die Steine (5) als lose Steine (5) in gleichen Gruppen verlegt sind.

10. Straßenrand, welcher eine Decke (4) gemäß irgendeinem der vorhergehenden Ansprüche aufweist, **dadurch gekennzeichnet, dass** die Steine (5) in den Gruppen (208) zwischenverbunden sind, um Platten mittels der Übergangsbereiche zu bilden, welche durch Weiterführung des Betonmaterials der Steine (5) gebildet werden, wobei die Übergangsbereiche als beabsichtigte Bruchbereiche gebildet sind, wobei die beabsichtigten Bruchbereiche vorzugsweise als konkave und konvexe Übergangsbereiche gebildet sind.

11. Straßenrand, welcher eine Decke (4) gemäß irgendeinem der vorhergehenden Ansprüche aufweist, **dadurch gekennzeichnet, dass** die beabsichtigten Bruchbereiche durch eine Kerbe über mehr als die Hälfte der Steinhöhe gebildet werden, beginnend an der oberen Oberfläche der Steine (5), wobei sich die Kerben vorzugsweise über ungefähr 2/3 von der Steinhöhe erstrecken, beginnend an der oberen Oberfläche der Steine (5).

12. Straßenrand, welcher eine Decke (4) gemäß irgendeinem der vorhergehenden Ansprüche aufweist, **gekennzeichnet durch** ein Tuch oder Stoff, wie beispielsweise ein Geotextil, auf welchem die Steine (5) frei gelagert sind, und mit welchem sie nur durch freie Lagerung verbunden sind.

13. Straßenrand, welche eine Decke (4) gemäß Anspruch 10 oder 11 aufweist, **gekennzeichnet durch** eine tuch- oder stoffartige Unterlage, wie beispielsweise ein Geotextil, mit welchem die Platte eng verbunden ist.

## Revendications

1. Accotement comprenant un recouvrement (4) formé en tant qu'une bande d'accotement qui s'étend le long d'un revêtement (2), ledit recouvrement (4) étant composé de blocs de béton (5), formant une liaison pouvant être ou ne pas être fixe, ladite liaison étant orientée transversalement et longitudinalement par rapport au sens de déplacement (A) ou au sens principal du revêtement (2),
**caractérisé en ce que**
des zones de transition ou des jonctions (14a, 14b) entre les blocs (5) parallèlement au sens de déplacement (A) sont échelonnées l'une par rapport à l'autre,
dans lequel les blocs (5) sont agencés dans des groupes (208) égaux, les groupes (208) étant composés d'un nombre de premiers blocs (11) avec des côtés longitudinaux et latéraux et d'un nombre de deuxièmes blocs (10) avec des côtés longitudinaux correspondant aux côtés latéraux des premiers blocs (11), dans lequel les premiers blocs (11) ont des côtés latéraux et longitudinaux égaux et dans lequel les deuxièmes blocs (10) ont des côtés latéraux d'une moitié d'un côté longitudinal ; et
dans lequel chaque groupe (208) est composé de cinq premiers blocs (11) et de deux deuxièmes blocs (10),
dans lequel, dans le sens de déplacement (A), deux premiers blocs (11), qui sont adjacents l'un à l'autre transversalement au sens de déplacement (A), sont suivis par un ensemble (8b) formé par un premier bloc (11) ayant, à des côtés longitudinaux qui sont opposés dans un sens transversal au sens de déplacement (A), des deuxièmes blocs de raccordement (10) qui sont situés avec leur sens longitudinal parallèle au sens de déplacement (A), et dans lequel, dans le sens de déplacement (A), l'ensemble (8b) est suivi par deux premiers blocs (11), qui sont adjacents l'un à l'autre transversalement au sens de déplacement (A) ; et
dans lequel les groupes (208) sont placés dans une série de raccordement dans le sens de déplacement (A).

2. Accotement comprenant un recouvrement (4) selon la revendication 1, **caractérisé en ce que** chaque groupe a une longueur multipliée par une largeur d'environ 122 x 82 cm.

3. Accotement comprenant un recouvrement (4) selon la revendication 1 ou 2, **caractérisé en ce que** les premiers blocs (11) ont une longueur multipliée par une largeur d'environ 41 x 41 cm, et les deuxièmes blocs (10) ont une longueur multipliée par une largeur d'environ 41 x 21 cm.

4. Accotement comprenant un recouvrement (4) selon l'une quelconque des revendications précédentes, **caractérisé en ce qu'**un bord (9a) du recouvrement d'accotement (4) en bordure d'un bord (7) du revêtement (2) est droit.

5. Accotement comprenant un recouvrement (4) selon l'une quelconque des revendications précédentes, **caractérisé en ce que**, au moins aux côtés latéraux s'étendant transversalement au sens de déplacement (A), les blocs (10, 11) sont pourvus de profils concaves et convexes (20, 21) pour s'emboîter l'un dans l'autre, dans lequel chaque bloc (10, 11) a deux bords latéraux opposés, l'un d'entre eux étant pourvu des profils concaves (20) et l'autre bord latéral étant pourvu des profils convexes (21).

6. Accotement comprenant un recouvrement (4) selon l'une quelconque des revendications précédentes, **caractérisé en ce que**, au moins aux côtés longitudinaux s'étendant parallèlement au sens de déplacement (A), les blocs (10, 11) sont pourvus de profils concaves et convexes (20, 21) pour s'emboîter l'un dans l'autre, dans lequel chaque bloc (10, 11) a deux côtés longitudinaux opposés, l'un d'entre eux étant pourvu des profils concaves (20) et l'autre bord longitudinal étant pourvu des profils convexes (21).

7. Accotement comprenant un recouvrement (4) selon l'une quelconque des revendications précédentes, **caractérisé en ce que** la liaison de blocs est dépourvue d'éléments de liaison horizontaux passés à travers les blocs (5).

8. Accotement comprenant un recouvrement (4) selon l'une quelconque des revendications précédentes, **caractérisé en ce que** les blocs (5) sont pourvus de trous continus verticalement (30).

9. Accotement comprenant un recouvrement (4) selon l'une quelconque des revendications précédentes, **caractérisé en ce que** les blocs (5) sont posés en tant que blocs détachés (5) en groupes égaux.

10. Accotement comprenant un recouvrement (4) selon l'une quelconque des revendications 1 à 8, **caractérisé en ce que** les blocs (5) sont interconnectés dans les groupes (208) pour former des dalles au moyen de zones de transition qui sont formées par continuation du matériau de béton des blocs (5), dans lequel les zones de transition sont formées en tant que zones de fractures prévues, les zones de fractures prévues étant de préférence formées en tant que zones de transition concaves et convexes.

11. Accotement comprenant un recouvrement (4) selon la revendication 10, **caractérisé en ce que** les zones de fractures prévues sont formées par une encoche le long de plus de la moitié de la hauteur de bloc, en commençant à partir de la surface supérieure des blocs (5), dans lequel les encoches s'étendent de préférence le long d'environ 2/3 de la hauteur de bloc, en commençant à partir de la surface supérieure des blocs (5).

12. Accotement comprenant un recouvrement (4) selon l'une quelconque des revendications précédentes, **caractérisé par** une feuille ou un tissu, comme un géotextile, sur lequel les blocs (5) sont librement supportés et avec lequel ils sont raccordés simplement par support libre.

13. Accotement comprenant un recouvrement (4) selon la revendication 10 ou 11, **caractérisé par** un support de type feuille ou tissu (40), comme un géotextile, auquel la dalle est étroitement raccordée.
